# EUROPÄISCHE PATENTANMELDUNG

(11) **EP 2 700 850 A2**
(43) Veröffentlichungstag der Anmeldung: **26.02.2014**
(21) Anmeldenummer: 13169098.4
(22) Anmeldetag: 24.05.2013
(51) Int. Cl.: F16K 1/44

(54) **Doppelsitzventil mit sicherer Schließfunktion**

(30) Priorität: 24.08.2012 DE 102012107830
(71) Anmelder: Karl Dungs GmbH & Co.KG, 73660 Urbach (DE)
(72) Erfinder: Berger, Siegfried, 73278 Schlierbach (DE); Lang, Martin, 71397 Nellmersbach (DE); Amann, Thomas, 73527 Schwäbisch Gmünd (DE)
(74) Vertreter: Rüger, Barthelt & Abel

(57) **Zusammenfassung**

Bei einem Doppelsitzventil (12) sind zwei vorzugsweise untereinander identische Ventilverschlussglieder (18, 20), die untereinander starr verbunden sind, und zwei vorzugsweise untereinander identische Ventilsitze (19, 21) vorgesehen. Das erste Ventilverschlussglied (18) ist stromabwärts des ersten Ventilsitzes (19) angeordnet. Das zweite Ventilverschlussglied (20) ist stromaufwärts des Ventilsitzes (21) angeordnet. Damit wird an dem ersten Ventilverschlussglied (18) eine radial innen liegende Dichtungszone (37) wirksam. Dagegen wird an dem zweiten Ventilverschlussglied (20) eine radial außen liegende Dichtungszone (38) wirksam. Durch die verschieden großen, von den Dichtungszonen (37, 38) umschlossenen Flächen, entstehen an beiden Ventilverschlussgliedern (18,20) unterschiedliche Axialkräfte, die sich zu einer schließenden Gesamtkraft überlagern. Trotz Verwendung einheitlicher Bauteile für die beiden Ventile (16, 17) entsteht somit an den beiden Ventilen (16, 17) eine resultierende schließend wirkende Kraft.

## Beschreibung

Die Erfindung betrifft ein Doppelsitzventil, insbesondere für Gase.

Es sind Doppelsitzventile bekannt, die zumindest zwei Ventilsitze und zwei diesen zugeordnete Ventilverschlussglieder aufweisen. Dazu zeigt die DE 195 25 384 C2 ein Doppelsitzventil mit einem gemeinsamen Antrieb für die beiden Ventilverschlussglieder, wobei die beiden koaxial zueinander angeordneten, jeweils aus Ventilsitz und Ventilteller gebildeten Ventile bezüglich der Durchströmung seriell angeordnet sind. Die beiden Ventilverschlussglieder bzw. Ventilteller sind dabei stromaufwärts zu dem zugehörigen Ventilsitz angeordnet. Eingangsseitig anstehender Druck belastet somit den Ventilteller gegen den Ventilsitz und unterstützt die Abdichtung. Der Ventilantrieb muss zum Lösen des Ventiltellers von dem Ventilsitz eine Kraft aufbringen, die sich aus der Fläche des Ventiltellers und der an dem Ventil vorhandenen Druckdifferenz ergibt.

Auch die DE 10 2004 004 708 B3 offenbart ein Doppelsitzventil mit magnetischer Betätigung. Ein erstes Ventil wird durch ein glockenförmiges Ventilverschlussglied gebildet, das einen Ventilteller übergreift. Dem glockenförmigen Ventilverschlussglied und dem Ventilteller ist ein gemeinsamer Ventilsitz zugeordnet.

Auch hier muss der Ventilantrieb eine Kraft aufbringen, die sich letztendlich aus dem Durchmesser des Ventilsitzes und dem an dem Ventil anstehenden Gasdruck ergibt.

Soll die zum Öffnen des Ventils erforderliche Kraft vermindert werden, können ein erstes und ein zweites Ventil parallel, jedoch gegensinnig durchflossen angeordnet und von dem gleichen Antrieb betätigt sein. Soll in einem solchen Falle sichergestellt sein, dass die beiden untereinander verbundenen Ventile durch den Eingangsdruck in Schließrichtung vorbelastet werden, müssen die beiden Verschlussglieder oder Ventilteller unterschiedliche Durchmesser aufweisen. Dies stellt einen erheblichen Bau- und Montageaufwand dar.

Es ist Aufgabe der Erfindung, ein Doppelsitzventil mit eigenständiger Schließwirkung mit geringerem Aufwand zu realisieren.

Diese Aufgabe wird mit dem Doppelsitzventil nach Anspruch 1 gelöst:

Das erfindungsgemäße Doppelsitzventil umfasst ein erstes und ein zweites Ventil mit jeweils einem Ventilsitz und einem Ventilverschlussglied. Die beiden Ventile sind strömungsmäßig parallel angeordnet. Die beiden Ventilverschlussglieder sind untereinander gleich ausgebildet. Im Schließzustand liegen beide Ventilverschlussglieder an ihrem jeweils zugeordneten Ventilsitz an. Weil das erste Ventil stromabwärts seines Ventilsitzes und das zweite Ventilverschlussglied stromaufwärts zu seinem Ventilsitz angeordnet ist, ergeben sich an beiden Ventilverschlussgliedern in entgegengesetzten Richtungen wirkende Gasdruckkräfte. Außerdem ergeben sich an den beiden Ventilen unterschiedliche Dichtungsverhältnisse. Während der (in Öffnungsrichtung wirkende) Gasdruck an dem ersten Ventil an dem inneren Rand des Ventilverschlussglieds ansteht, steht er bei dem zweiten Ventil (in Schließrichtung wirkend) an dessen äußeren Rand an. Damit legen die beiden Ventilverschlussglieder unterschiedliche Dichtungsanlageflächen fest, die jeweils den Gasdurchtritt hemmen. Die beiden unterschiedlichen Dichtungsanlageflächen umschließen unterschiedlich große wirksame Flächen, wodurch die vom Gasdruck herrührenden Kräfte an den beiden Ventilverschlussgliedern unterschiedliche Beträge aufweisen. Der von dem stromabwärtig angeordneten Ventilverschlussglied herrührende öffnend wirkende Kraftbestandteil ist kleiner als der von dem stromaufwärtig angeordneten zweiten Ventilverschlussglied herrührende schließend wirkende Kraftanteile. Der eingangsseitig anstehende Gasdruck unterstützt somit die Schließwirkung des Doppelsitzventils.

Die beiden Ventilverschlussglieder können untereinander gleich ausgebildet sein. Die unterschiedlich großen Durchmesser der beiden Dichtungsanlageflächen können durch eine entsprechend unterschiedliche Gestaltung des ersten und des zweiten Ventilsitzes erzielt werden. Es wird jedoch bevorzugt, die beiden Ventilsitze untereinander gleich auszubilden. Bevorzugt wird außerdem, dass nicht nur der erste und der zweite Ventilsitz untereinander gleich, sondern auch das erste und das zweite Ventilverschlussglied untereinander gleich ausgebildet sind. In diesem Fall sind das erste und das zweite Ventil baugleich. Dennoch werden unterschiedliche Durchmesser der ringförmigen Dichtungsanlageflächen u.a. dadurch erreicht, dass die Durchströmungsrichtungen des ersten und des zweiten Ventils zueinander entgegengesetzt festgelegt sind.

Das erste Ventilverschlussglied und das zweite Ventilverschlussglied sind untereinander vorzugsweise starr verbunden, bspw. durch eine Ventilspindel, eine Betätigungsstange oder dergleichen. Der Abstand der Ventilverschlussglieder voneinander entspricht dabei dem Abstand der Ventilsitze voneinander. Dadurch wird das gleichzeitige Schließen und Öffnen des ersten und des zweiten Ventils erreicht.

Die beiden Ventilverschlussglieder der beiden Ventile weisen vorzugsweise übereinstimmende Dichtungen auf. Vorzugsweise weist jede Dichtung eine äußere und eine innere Dichtungsstruktur auf, bspw. jeweils in Form einer ringförmigen Rippe. Die Rippen können einen Dreieckquerschnitt, einen Rundquerschnitt einen Viereckquerschnitt, eine Lippenstruktur oder einen anderen geeigneten Querschnitt aufweisen. Vorzugsweise stehen sie in Axialrichtung vor und sind konzentrisch zueinander angeordnet.

Der erste Ventilsitz wird vorzugsweise durch eine Planfläche gebildet. Unabhängig davon wird der zweite Ventilsitz vorzugsweise durch eine Planfläche gebildet. Wenn die erwähnte Dichtung zwei (oder mehrere) zueinander konzentrische Dichtungsstrukturen bspw. ringförmige Rippen aufweist, stehen im Schließzustand des ersten wie auch des zweiten Ventils vorzugsweise jeweils beide Rippen entlang ihres gesamten Umfangs auf dem Ventilsitz. Die Dichtungsanlagefläche wird dabei jeweils von derjenigen ringförmigen Rippe bestimmt, die dem höheren Gasdruck, d.h. der stromaufwärtigen Ventilseite zugewandt ist.

Ergänzend wird darauf hingewiesen, dass die Ventilsitze auch unterschiedlich ausgebildet sein können. Beispielsweise kann der Ventilsitz mit einer einfachen ringförmigen axial vorstehenden Rippe oder zwei zueinander konzentrischen axial vorstehenden Rippe versehen sein. Die Dichtung des Ventilverschlussglieds kann entsprechend eine Planfläche sein oder ebenfalls eine Rippenstruktur aufweisen. Weitere Kombinationen und Abwandlungen, insbesondere Kombination der vorgenannten einzelnen Merkmale, sind möglich.

In der Zeichnung sind Ausführungsbeispiele der Erfindung veranschaulicht. Es zeigen:
Figur 1 eine Ventilanordnung mit zwei Doppelsitzventilen, in schematischer längs geschnittener Darstellung,
Figur 2 und 3 Einzelheiten der Figur 1, jeweils in schematisierter ausschnittsweiser Vertikalschnittdarstellung,
Figur 4 und 5 eine abgewandelte Ausführungsform der Doppelsitzventilanordnung nach Figur 1, entsprechend den Figuren 2 und 3,
Figur 6 ein Doppelsitzventil mit unterschiedlichen Ventilsitzen, in einer Darstellung entsprechend Figur 2, und
Figur 7 eine weiter abgewandelte Ausführungsform eines Doppelsitzventils, in einer Darstellung entsprechend Figur 2.

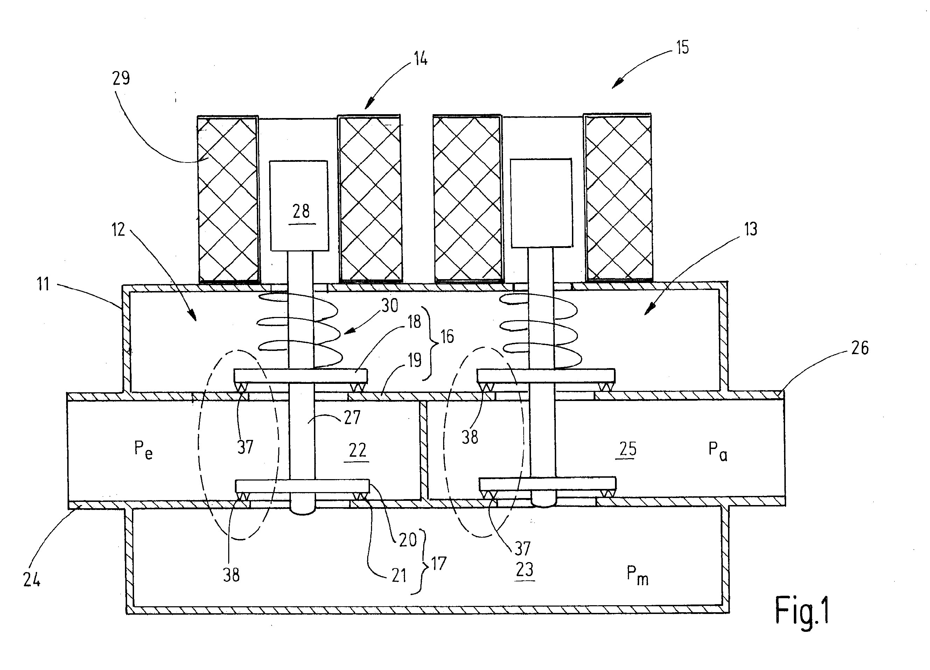

In Figur 1 ist eine Doppelsitzventilanordnung 10 veranschaulicht, zu der mindestens ein, vorzugsweise aber zwei zum Beispiel in einem gemeinsamen Gehäuse 11 untergebrachte Doppelsitzventile 12, 13 gehören. Die beiden Doppelsitzventile 12, 13 können untereinander gleich ausgebildet sein. Die nachfolgende Beschreibung des Doppelsitzventils 12 gilt deswegen entsprechend für das Doppelsitzventil 13. Die Doppelsitzventile 12, 13 sind strömungsmäßig hintereinander angeordnet und bilden somit eine Sicherheitsventilanordnung. Ihnen sind individuelle Antriebe 14, 15 zugeordnet, beispielsweise in Gestalt von Zugmagnetantrieben oder auch andere Antriebsanordnungen.

Zu dem Doppelsitzventil 12 gehören ein erstes Ventil 16 und ein zweites Ventil 17, die beide von dem gemeinsamen Antrieb 14 angetrieben sind. Das erste Ventil 16 weist ein erstes Ventilverschlussglied 18 und einen ersten Ventilsitz 19 auf. Das zweite Ventil 17 weist ein zweites Ventilverschlussglied 20 und einen zweiten Ventilsitz 21 auf. Die beiden Ventile 16, 17 grenzen einen Einströmraum 22 gegen einen Mittelraum 23 ab. Der Einströmraum 22 ist mit einem Eingangsanschluss 24 in Strömungsverbindung angeordnet. Das zweite Doppelsitzventil 13 grenzt den Mittelraum 23 gegen einen Abströmraum 25 ab, der mit einem Ausgangsanschluss 26 verbunden ist. An dem Eingangsanschluss 24 der Doppelsitzventilanordnung 10 liegt ein Eingangsdruck Pₑ an. An dem Ausgangsanschluss 26 liegt der deutlich niedrigere Ausgangsdruck Pₐ an. In dem Mittelraum 23 liegt ein Druck Pₘ an, der mit dem Eingangsdruck Pₑ oder dem Ausgangsdruck Pₐ übereinstimmt oder dazwischen liegen kann.

Das erste Ventilverschlussglied 18 und das zweite Verschlussglied 20 sind über eine Ventilspindel 27 vorzugsweise starr verbunden, die mit dem Antrieb 14 in Verbindung steht. Sie kann dazu mit einem Magnetanker 28 verbunden sein, der von einer Magnetspule 29 axial bewegbar ist. Magnetische Flussleitstücke, Joche und dergleichen, sind in üblicher Weise vorhanden, in Figur 1 jedoch nicht weiter dargestellt.

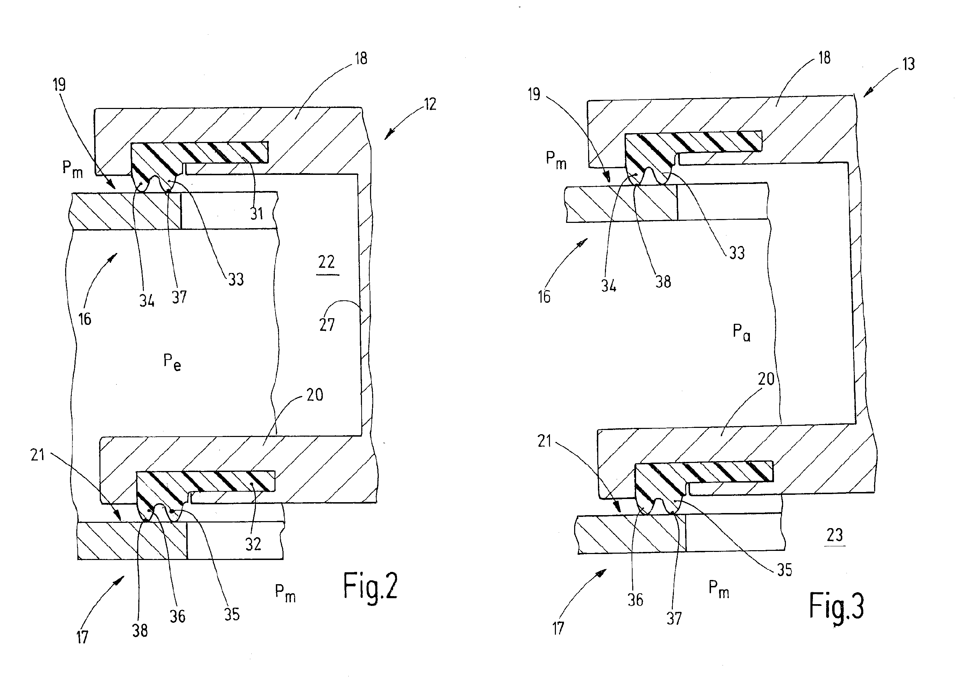

Konzentrisch zu der Ventilspindel 27 kann eine Schließfeder 30 vorgesehen sein, die bspw. als Druckfeder ausgebildet ist und die beiden Ventile 16, 17 in Schließrichtung belastet. Die beiden Ventilverschlussglieder 18, 29 sind vorzugsweise konzentrisch zueinander angeordnet und untereinander baugleich. Mit anderen Worten, es können einheitliche Ventilteller für die Ventile 16, 17 genutzt werden. Figur 2 veranschaulicht die Ventile 16, 17 näher. Das Ventilverschlussglied 18 ist im Wesentlichen scheiben- oder tellerförmig ausgebildet. Es kann auch glockenförmig, trichterförmig sein oder eine sonstige vorzugsweise rotationssymmetrische Form aufweisen. In der Nähe seines äußeren Rands ist eine ringförmige Dichtung 31 angeordnet. An dem Ventilverschlussglied 20 ist an gleicher Position eine Dichtung 32 angeordnet. Vorzugsweise stimmen die Dichtungen 31, 32 des ersten und des zweiten Ventilverschlussglieds 18, 20 miteinander überein.

Die Dichtung 31 weist vorzugsweise zwei axial vorstehende bevorzugterweise in Axialrichtung gleich hohe kreisförmige Dichtungsrippen 33, 34 auf. Die Dichtung 31 besteht einschließlich ihrer Dichtungsrippen 33, 34 vorzugsweise aus einem nachgiebigen, fluiddichten Material, wie Kautschuk, Gummi, einem Elastomer oder dergleichen. Die Dichtungsrippen 33, 34 können konzentrisch zueinander angeordnet sein.

Die Dichtungsrippe 32 ist mit der Dichtungsrippe 31 vorzugsweise baugleich. Sie weist ebenfalls eine innere Dichtungsrippe 35 und eine äußere Dichtungsrippe 36 auf. Die sonstige Beschreibung der Dichtung 31 gilt entsprechend für die Dichtung 32.

Das insoweit beschriebene Doppelsitzventil 12 arbeitet wie folgt:

In geschlossenem Zustand liegt in dem Einströmraum 22 der Eingangsdruck Pₑ an. Dieser ist mindestens so groß wie der Mitteldruck Pₘ, vorzugsweise aber größer als dieser. Das mit dem Druck Pₑ anliegende Gas trifft an dem ersten Ventil 16 auf die (radial innere) Dichtungszone 37, bei der die innere Rippe 33 an dem vorzugsweise ebenen Ventilsitz 19 anliegt. Bei dem zweiten Ventil 17 trifft das Gas mit dem Eingangsdruck Pₑ auf eine (radial äußere) ringförmige Dichtungszone 38, die zwischen der äußeren Dichtungsrippe 36 und dem Ventilsitz 21 ausgebildet ist. Wie ersichtlich, weist die Dichtungszone 37 einen geringeren Radius oder Durchmesser auf als die zweite Dichtungszone 38. Auf die von der Dichtungszone 37 umschlossene Fläche wirkt der Eingangsdruck Pₑ öffnend auf das erste Ventilverschlussglied 18. Auf das zweite Ventilverschlussglied 20 wirkt der gleiche Eingangsdruck Pₑ auf die größere, von der äußeren Dichtungsrippe umschlossene Dichtungsfläche 38. Weil die beiden Ventilverschlussglieder 18, 20 untereinander starr verbunden sind, bleibt insgesamt eine Differenzkraft übrig, die auf die aus den beiden Ventilverschlussgliedern 18, 20 bestehende Einheit schließend wirkt. Dies obwohl beide Ventilverschlussglieder 18, 20 und beide Ventilsitze 19, 21 identisch aufgebaut sind.

Die Verhältnisse an dem zweiten Doppelsitzventil 13 sind in Figur 3 veranschaulicht. Der Einfachheit wegen sind die im Zusammenhang mit dem Doppelsitzventil 12 eingeführten Bezugszeichen erneut verwendet. Die Dichtungszone 38 des ersten Ventils 16 ist hier zwischen der äußeren Rippe 34 und dem Ventilsitz 19 ausgebildet. Der Mitteldruck Pₘ ist größer als der Ausgangsdruck Pₐ. Somit trifft das unter dem Druck Pₘ stehende Gas bei dem Ventil 16 zuerst auf die äußere Dichtungsrippe 34. Bei dem zweiten Ventil 17 trifft das unter dem Druck Pₘ stehende Gas zuerst auf die zwischen der inneren Rippe 35 und dem Ventilsitz 21 ausgebildete Dichtungszone 37. Nunmehr wirkt an dem Ventilverschlussglied 20 eine öffnende Kraft, die wegen des geringeren Durchmessers der Dichtungszone 37 kleiner ist als die auf das Ventilverschlussglied 18 wirkende schließende Kraft. Letztere wird von dem größeren Durchmesser der Dichtungszone 38 bestimmt. Die resultierende Differenzkraft ist wiederum eine schließende Kraft.

Bei beiden Doppelsitzventilanordnungen 12, 13 ergibt sich infolge der jeweiligen Druckbeaufschlagung und der unterschiedlichen Durchströmungsrichtungen der Ventile 16, 17 jeweils eine schließende Ruhekraft aus dem Gasdruck Pₑ bzw. Pₘ. Die unterschiedliche Durchströmung der beiden strömungmäßig parallel wirkenden Ventile 17, 18 ergibt sich daraus, dass das Ventilverschlussglied 18 des ersten Ventils 16 stromabwärts des Ventilsitzes 19 angeordnet ist, während das Ventilverschlussglied 20 des zweiten Ventils 17 stromaufwärts des Ventilsitzes 21 angeordnet ist. Ähnlich liegen die Verhältnisse bei dem zweiten Doppelsitzventil 13. Dort ist aus Sicht des Mittelraums 23 das erste Ventilverschlussglied 18 stromaufwärts und das zweite Ventilverschlussglied 20 stromabwärts angeordnet. Wiederum ergibt sich eine schließend wirkende Differenzkraft.

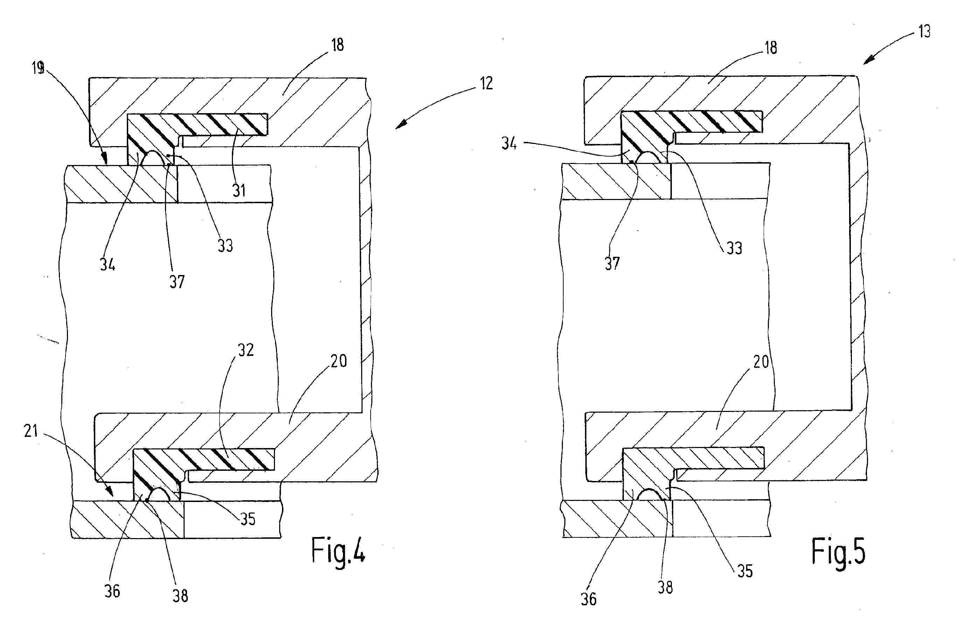

Die Ventilverschlussglieder 18, 20 können, wie Figur 4 und 5 zeigen, bei den Doppelsitzventilen 12, 13 mit abweichend gestalteten Dichtungen 31, 32 versehen sein. Zum Beispiel kann die Form der Rippen 33, 34, 35, 36 jeden geeigneten Dichtungsquerschnitt aufweisen. Während die Dichtungsrippen 33 bis 36 gemäß Figur 2 und 3 ein gerundetes Profil aufweisen können und somit im Wesentlichen linienförmige Dichtungszonen 37, 38 definieren, können die Dichtungsrippen 33 bis 36 gemäß Figur 4 und 5 auch abgeflacht ausgebildet sein, um streifenförmige Dichtungszonen 37, 38 festzulegen.

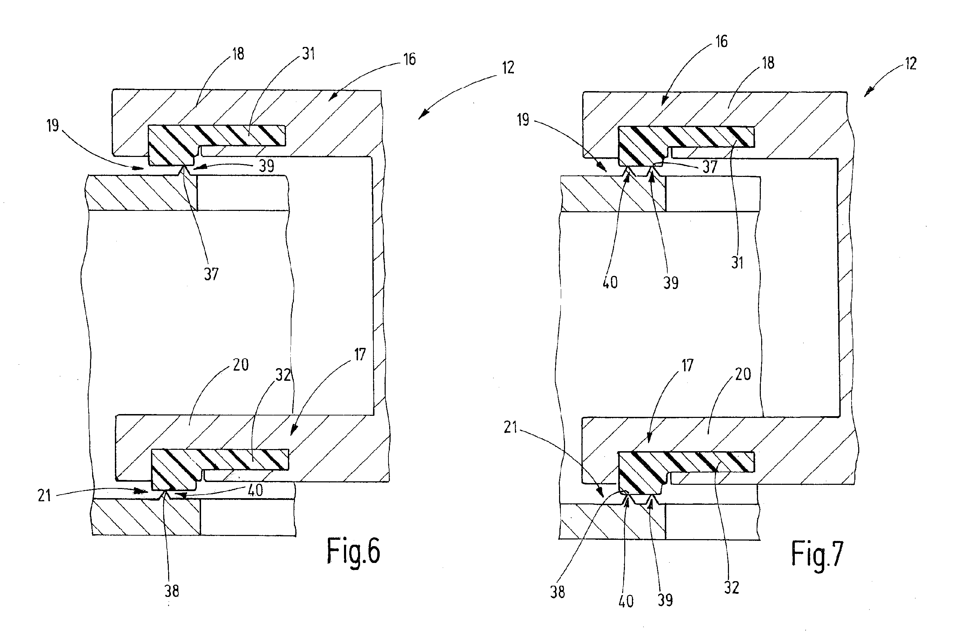

Alternativ können die Dichtungen 31, 32, wie es Figur 6 zeigt, auch einheitlich abgeflacht ausgebildet sein. Die unterschiedlichen Dichtungszonen 37, 38 können hier durch ringförmige rippenartige Vorsprünge 39, 40 an den Ventilsitzen 19, 21 ausgebildet sein, die z.B. einen Dreieckquerschnitt haben können. Die Vorsprünge 39, 40 können unterschiedliche Durchmesser aufweisen, um den Dichtungszonen 37, 38, wie gewünscht, unterschiedliche Durchmesser zu geben.

Es ist auch möglich, die Vorsprünge mit einem anderen Querschnitt, z.B. einem Rechteckquerschnitt zu versehen. Es ergibt sich dann ein gestufter Ventilsitz. Im Zusammenwirken mit einem Ventilverschlussglied 18, 20 nach einer der Figuren 1 bis 4 wird erreicht, das nur einer der Dichtungsrippen 33, 34 bzw. 35, 36 am Ventilsitz zur Anlage kommt. Dies kann von Interesse sein, wenn nur sehr geringe Öffnungskräfte zur Verfügung stehen und die Schließfederkraft entsprechend reduziert werden muss. Für beide Ventilteller (oberer und unterer) können wiederum gleiche Teile verwendet werden.

Wie Figur 7 zeigt, ist es auch möglich, die Ventilsitze 19, 21 einheitlich auszubilden, indem jeder der beiden Ventilsitze 19, 21 mit beiden Vorsprüngen 39, 40 versehen ist. Die unterschiedlichen Durchmesser der Dichtungszonen 37, 38 ergeben sich hier wieder, wie schon im Zusammenhang mit Figur 2 und 3 erläutert, durch die unterschiedliche Anordnung der beiden Ventilverschlussglieder 18, 20 in Bezug auf den jeweiligen Ventilsitz 19, 21 (stromaufwärtig oder stromabwärtig) und somit in Abhängigkeit davon, an welcher Stelle der Dichtung 31, 32 (innen oder außen) der Gasdruck abgesperrt wird.

Bei einem Doppelsitzventil 12 sind zwei vorzugsweise untereinander identische Ventilverschlussglieder 18, 20, die untereinander starr verbunden sind, und zwei vorzugsweise untereinander identische Ventilsitze 19, 21 vorgesehen. Das erste Ventilverschlussglied 18 ist stromabwärts des ersten Ventilsitzes 19 angeordnet. Das zweite Ventilverschlussglied 20 ist stromaufwärts des Ventilsitzes 21 angeordnet. Damit wird an dem ersten Ventilverschlussglied 18 eine radial innen liegende Dichtungszone 37 wirksam. Dagegen wird an dem zweiten Ventilverschlussglied 20 eine radial außen liegende Dichtungszone 38 wirksam. Durch die verschieden großen, von den Dichtungszonen 37, 38 umschlossenen Flächen, entstehen an beiden Ventilverschlussgliedern 18, 20 unterschiedliche Axialkräfte, die sich zu einer schließenden Gesamtkraft überlagern. Trotz Verwendung einheitlicher Bauteile für die beiden Ventile 16, 17, entsteht somit an den beiden Ventilen 16, 17 eine resultierende schließend wirkende Kraft.

**Bezugszeichenliste:**

| | |
|---|---|
| 10 | Doppelsitzventilanordnung |
| 11 | Gehäuse |
| 12, 13 | Doppelsitzventile |
| 14, 15 | Antrieb |
| 16 | erstes Ventil |
| 17 | zweites Ventil |
| 18 | erstes Ventilverschlussglied |
| 19 | erster Ventilsitz |
| 20 | zweites Ventilverschlussglied |
| 21 | zweiter Ventilsitz |
| 22 | Einströmraum |
| 23 | Mittelraum |
| 24 | Eingangsanschluss |
| 25 | Abströmraum |
| 26 | Ausgangsanschluss |
| 27 | Ventilspindel |
| 28 | Magnetanker |
| 29 | Magnetspule |
| 30 | Schließfeder |
| 31 | Dichtung des ersten Ventilverschlussglieds 18 |
| 32 | Dichtung des zweiten Ventilverschlussglieds 20 |
| 33 | innere Dichtungsrippe der Dichtung 31 |
| 34 | äußere Dichtungsrippe der Dichtung 31 |
| 35 | innere Dichtungsrippe der Dichtung 32 |
| 36 | äußere Dichtungsrippe der Dichtung 32 |
| 37 | Dichtungszone |
| 38 | Dichtungszone |
| 39 | Vorsprung des Ventilsitzes 19 |
| 40 | Vorsprung des Ventilsitzes 21 |

## Patentansprüche

1. Doppelsitzventil (12)
mit einem ersten Ventil (16), zu dem ein erster Ventilsitz (19) und ein erstes, stromabwärts zu diesem angeordnetes Ventilverschlussglied (18) gehören, das mit dem ersten Ventilsitz (19) eine erste ringförmige Dichtungsanlagefläche (37) festlegt,
mit einem zweiten Ventil (17), zu dem ein zweiter Ventilsitz (21) und ein zweites, stromaufwärts zu diesem angeordnetes Ventilverschlussglied (20) gehören, das mit dem zweiten Ventilsitz (21) eine zweite ringförmige Dichtungsanlagefläche (38) festlegt,
wobei das erste Ventilverschlussglied (18) und das zweite Ventilverschlussglied (20) untereinander verbunden sind und wobei die erste Dichtungsanlagefläche (37) eine Fläche umschließt, die geringer ist als eine von der zweiten Dichtungsanlagefläche (38) umschlossene Fläche,
wobei das erste Ventilverschlussglied (18) und das zweite Ventilverschlussglied (20) untereinander gleich ausgebildet sind.

2. Doppelsitzventil nach Anspruch 1, **dadurch gekennzeichnet, dass** das erste Ventil (16) und das zweite Ventil (17) untereinander baugleich ausgebildet sind.

3. Doppelsitzventil nach einem der vorstehenden Ansprüche, **dadurch gekennzeichnet, dass** das erste Ventilverschlussglied (18) und das zweite Ventilverschlussglied (20) untereinander durch eine Ventilspindel (27) verbunden sind.

4. Doppelsitzventil nach einem der vorstehenden Ansprüche, **dadurch gekennzeichnet, dass** das erste Ventilverschlussglied (18) und das zweite Ventilverschlussglied (20) untereinander axial fest miteinander verbunden sind.

5. Doppelsitzventil nach einem der vorstehenden Ansprüche, **dadurch gekennzeichnet, dass** an den Ventilverschlussgliedern (18, 20) übereinstimmende Dichtungen (31, 32) angeordnet sind.

6. Doppelsitzventil nach Anspruch 5, **dadurch gekennzeichnet, dass** jede Dichtung (31, 32) eine innere Dichtungsstruktur (33, 35) und eine äußere Dichtungsstruktur (34, 36) aufweist.

7. Doppelsitzventil nach Anspruch 6, **dadurch gekennzeichnet, dass** die Dichtungsstrukturen (33, 34, 35, 36) durch ringförmige, axial vorstehende Rippen gebildet sind.

8. Doppelsitzventil nach einem der vorstehenden Ansprüche, **dadurch gekennzeichnet, dass** der erste Ventilsitz (19) und der zweite Ventilsitz (21) durch Ringflächen gebildet sind.

9. Doppelsitzventil nach einem der vorstehenden Ansprüche, **dadurch gekennzeichnet, dass** der erste Ventilsitz (19) und der zweite Ventilsitz (21) durch ringförmige Planflächen gebildet sind.

10. Doppelsitzventil nach einem der vorstehenden Ansprüche, **dadurch gekennzeichnet, dass** der erste Ventilsitz (19) und der zweite Ventilsitz (21) untereinander gleich ausgebildet sind.
